# EUROPEAN PATENT APPLICATION

(11) **EP 1 718 084 A2**
(43) Date of publication of application: **02.11.2006**
(21) Application number: 06252177.8
(22) Date of filing: 21.04.2006
(51) Int. Cl.: H04N 9/31, H04N 5/74

(54) **Illumination unit and image projection apparatus having the same**

(30) Priority: 25.04.2005 KR 20050034158
(71) Applicant: Samsung Electronics Co., Ltd., Suwon-si Gyeonggi-do (KR)
(72) Inventor: Lee, Kye-hoon, Suwon-si Gyeonggi-do (KR); Lee, Won-yong, Yeongtong-gu Suwon-si Gyeonggi-do (KR); Lee, Young-chol, Gunpo-si Gyeonggi-do (KR)
(74) Representative: Sherrard-Smith, Hugh

(57) **Abstract**

An illumination unit and an image projection apparatus having the same are provided. The illumination unit includes: at least one light source unit which radiates a collimated light beam; an optical integrator which converts the collimated light beam from the at least one light source unit into a uniform light beam; and a condensing lens system, disposed between the at least one light source unit and the optical integrator, which reduces a cross-section of the collimated light beam emitted from the at least one light source unit and then guides the collimated light beam with the reduced cross-section to the optical integrator and has a 1:1 conjugate property between an object and an image of the object.

## Description

This application claims priority from Korean Patent Application No. 10-2005-0034158, filed on April 25, 2005, in the Korean Intellectual Property Office, the disclosure of which is incorporated herein in its entirety by reference.

Apparatuses and methods consistent with the present invention relate to an illumination unit for illuminating light and an image projection apparatus having the same and, to an illumination unit, and an image projection apparatus having the same.

In general, illumination units include a light source radiating light and an illumination optical system transmitting light radiated by the light source. Illumination units are widely used in image projection apparatuses for realizing an image using an image forming device, such as a liquid crystal display (LCD) device or a digital micromirror device, having no emission capability. Recently, illumination units and image projection apparatuses using small-sized light emitting devices, such as light emitting diodes (LEDs), as a light source have been developed.

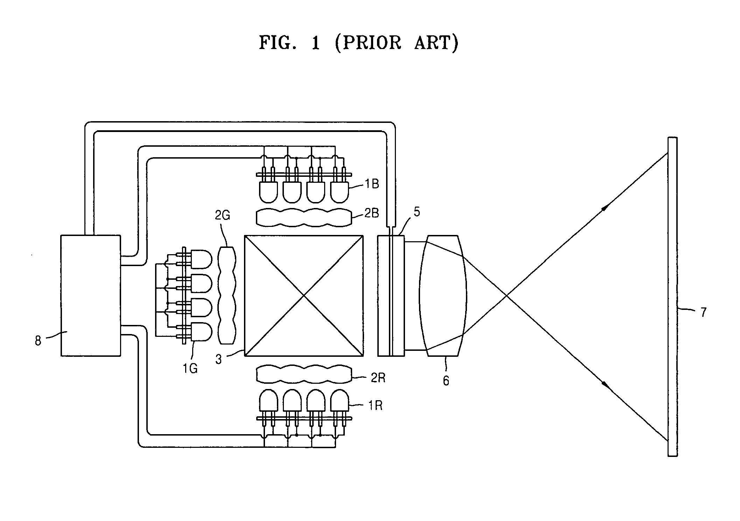

FIG. 1 is a schematic view of an optical system of a conventional image projection apparatus disclosed in U.S. Patent No. 6882379. Referring to FIG. 1, the conventional image projection apparatus collimates colored light emitted from red, green, and blue LED light sources 1R, 1G, and 1B arranged in an array using lens arrays 2R, 2G, and 2B and synthesizes the colored light using a color synthesis prism 3. The colored light is integrated into one optical path via the color synthesis prism 3 and then is illuminated onto an LCD device 5. Driving of the red, green, and blue LED light sources 1R, 1G, and 1B and the LCD device 5 is controlled by a display control circuit 8. The light is modulated in the LCD device 5 as image information and represented as an image on a projection screen 7 through a projection lens 6.

In the conventional image projection apparatus, since an emission area of the red, green, and blue LED light sources 1R, 1G, and 1B arranged in an array should not be larger than an effective display area of the LCD device 5, it is difficult to array a plurality of LED light sources, and thus, brightness of a projected image is limited.

In addition, since light emitted from the red, green, and blue LED light sources 1R, 1G, and 1B arranged in an array passes through the lens arrays 2R, 2G, and 2B and then is illuminated onto the LCD device 5, light uniformity on the projection screen 7 cannot be easily obtained.

The present invention provides an illumination unit and an image projection apparatus having the same.

According to an aspect of the present invention, there is provided an illumination unit comprising: at least one light source unit which radiates a collimated light beam; an optical integrator which converts the collimated light beam from the at least one light source unit into a uniform light beam having uniform brightness distribution; and a condensing lens system that is disposed between the at least one light source unit and the optical integrator, wherein the condensing lens system reduces a cross-section of the collimated light beam emitted from the at least one light source unit and then guides the collimated light beam with the reduced cross-section to the optical integrator and has a 1:1 conjugate property between an object and an image of the object.

The condensing lens system may be a telecentric lens system.

The at least one light source unit may have an emitting surface, the optical integrator may have an incident surface, the emitting surface of the at least one light source unit and the incident surface of the optical integrator may have a similar shape, and the condensing lens system may have a magnification according to a ratio of a size of the emitting surface of the at least one light source unit and a size of the incident surface of the optical integrator.

The emitting surface of the at least one light source unit may be placed on an object plane of the condensing lens system, and the incident surface of the optical integrator may be placed on an image plane of the condensing lens system.

The at least one light source unit may have an emitting surface, the optical integrator may have an incident surface, the emitting surface of the at least one light source unit and the incident surface of the optical integrator may have a similar shape, and the condensing lens system may have a magnification according to a ratio of a size of the emitting surface of the at least one light source unit and a size of the incident surface of the optical integrator.

The emitting surface of the at least one light source unit may be placed on an object plane of the condensing lens system, and the incident surface of the optical integrator may be placed on an image plane of the condensing lens system.

The optical integrator may be a light tunnel having a rectangular parallelepiped shape or a fly-eye lens.

If an illumination unit comprises a plurality of light source units and the plurality of light source units radiate different colored light, the illumination unit may further include a color synthesis prism, disposed between the plurality of light source units and the condensing lens system, which synthesizes the different colored light such that the different colored light travels along a same optical path.

Each of the plurality of light source units may include: a plurality of LED light sources arranged in a two-dimensional array; and a collimator which collimates light emitted from the LED light sources.

The collimator may include a plurality of parabolic reflectors arranged in an array, respectively constituting optical modules with the plurality of LED light sources.

The collimator may be formed in a lens array corresponding to the arrangement of the plurality of light source units.

According to another embodiment of the present invention, there is provided an image projection apparatus comprising: an illumination unit; an image forming device which forms an image corresponding to an image signal input using a uniform light beam having uniform brightness distribution and incident from the illumination unit; and a projection lens unit which enlarges and projecting the image formed by the image forming device onto a screen, wherein the illumination unit comprises: at least one light source unit which radiates a collimated light beam; an optical integrator which converts the collimated light beam from the at least one light source unit into the uniform light beam; and a condensing lens system that is disposed between the at least one light source unit and the optical integrator, wherein the condensing lens system reduces a cross-section of the collimated light beam emitted from the at least one light source unit and then guides the collimated light beam with the reduced cross-section to the optical integrator and has a 1:1 conjugate property between the image of an object and the object.

The image forming device may be a reflection type image forming device selectively reflecting the uniform light beam from the illumination unit to form an image, and the image projection apparatus may further include an optical path changer disposed between the illumination unit and the image forming device and the optical path changer changes a path of the uniform light beam incident from the illumination unit and directs light reflected by the image forming device toward the screen.

The reflection type image forming device may include a plurality of micromirrors arranged in an array.

The reflection type image forming device may be a reflection type LCD device, and the optical path changer may transmit or reflect the uniform light beam according to polarization of the uniform light beam.

The image forming device may be a transmission type LCD device.

The above and other features and advantages of the present invention will become more apparent by describing in detail exemplary embodiments thereof with reference to the attached drawings, in which:
FIG. 1 is a schematic view of an optical system of a conventional image projection apparatus disclosed in U.S. Patent No. 6882379;
FIG. 2 is a schematic view of an optical configuration of an illumination unit according to an exemplary embodiment of the present invention;
FIG. 3 shows an exemplary optical path of light generated in a condensing lens system of FIG. 2;
FIG. 4 is a schematic perspective view of an exemplary light tunnel of FIG. 2;
FIG. 5 is a schematic view of an optical configuration of an exemplary embodiment of an image projection apparatus using an illumination unit according to the present invention;
FIG. 6 is a schematic perspective view of an exemplary lens array type collimator of FIG. 5;
FIG. 7 is a schematic view of an optical configuration of another exemplary embodiment of an image projection apparatus having an illumination unit according to the present invention;
FIG. 8 is a schematic perspective view of an exemplary structure of first through third light source units of FIG. 7;
FIG. 9 is a perspective view of one exemplary LED optical module of FIG. 8;
FIG. 10 is a cross-sectional view taken along line X-X of FIG. 9; and
FIGS. 11 and 12 are schematic views of optical configurations of other exemplary embodiments of projection apparatuses having an illumination unit according to the present invention.

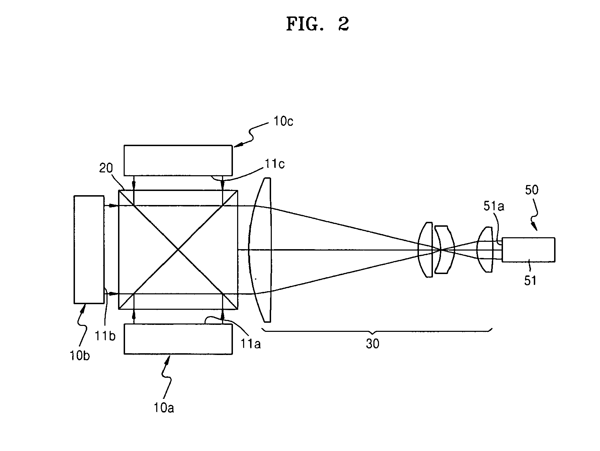

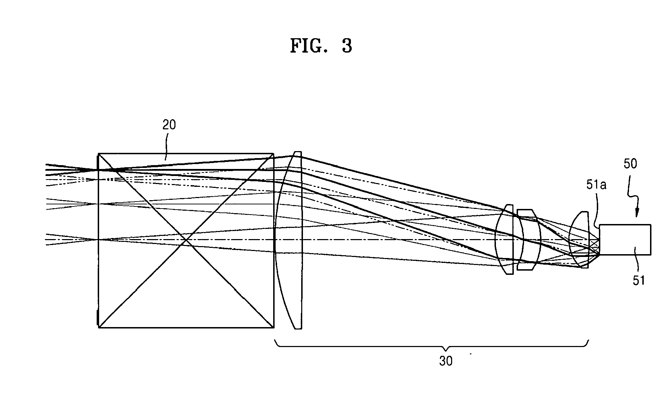

FIG. 2 is a schematic view of an optical configuration of an illumination unit according to an exemplary embodiment of the present invention, and FIG. 3 shows an exemplary optical path of light generated in a condensing lens system of FIG. 2.

Referring to FIGS. 2 and 3, the illumination unit includes at least one light source unit radiating a collimated light beam, an optical integrator 50 to make uniform incident light from the light source unit, and a condensing lens system 30 disposed between the light source unit and the optical integrator 50.

The illumination unit may be provided with a plurality of light source units. In this case, the light source units may radiate different colors. In FIGS. 2 and 3, the illumination unit is provided with first through third light source units 10a, 10b, and 10c radiating red, green, and blue light, respectively, for example.

When the illumination unit is provided with the first through third light source units 10a, 10b, and 10c as shown in FIGS. 2 and 3, a color synthesis prism 20, for example, an X-cube prism, may be further disposed between the first through third light source units 10a, 10b, and 10c and the condensing lens system 30. The color synthesis prism 20 synthesizes colored light emitted from the first through third light sources 10a, 10b, and 10c and integrates the synthesized colored light into one optical path. The illumination unit may alternatively be provided with a single light source unit radiating white light. In this case, the color synthesis prism 20 is not needed.

The first through third light source units 10a, 10b, and 10c include a plurality of LED light sources arranged in a two-dimensional array as will be shown in subsequent embodiments, and a collimator collimating light emitted from the LED light sources. The collimator may be an arrangement of collimating lens elements corresponding to an arrangement of a plurality of LED light sources or an arrangement of parabolic reflectors that constitute an optical module with each of the LED light sources. The collimator is configured so that collimating lens elements or parabolic reflectors respectively correspond to the LED light sources.

The first through third light source units 10a, 10b, and 10c emit red, green, and blue light, for example. The red, green, and blue light emitted from the first through third light source units 10a, 10b, and 10c is incident on the color synthesis prism 20. The color synthesis prism 20 synthesizes incident light so that the incident color light from the first through third light source units 10a, 10b, and 10c travels along the same optical path.

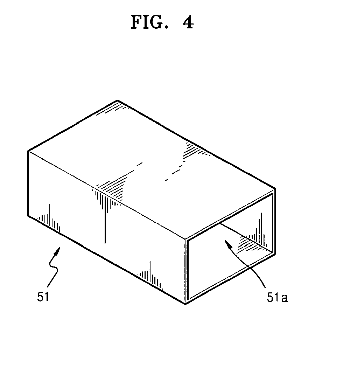

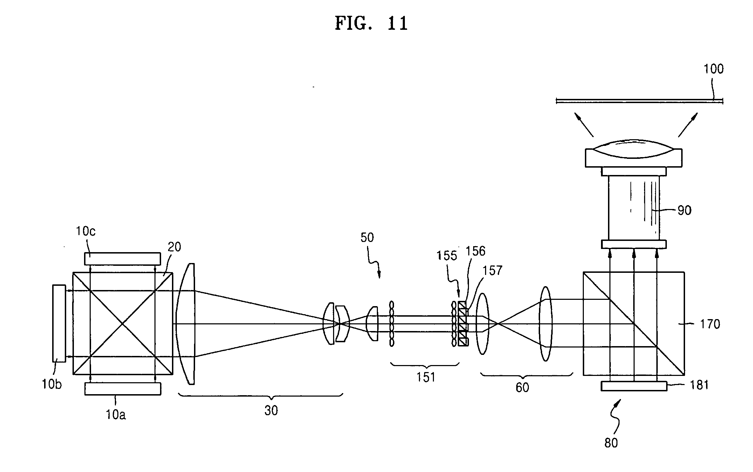

The optical integrator 50 integrates incident light beams from the first through third light source units 10a, 10b, and 10c into the same optical path to form uniform light. The optical integrator 50 may be a light tunnel 51 having a rectangular parallelepiped shape as shown in FIG. 4. FIG. 4 shows an example in which the light tunnel 51 is hollow. The light tunnel 51 may be an optical medium block having a rectangular parallelepiped shape. Alternatively, instead of the light tunnel 51, a pair of fly-eye lenses (151 of FIG. 11) may be used as the optical integrator 50.

The first through third light source units 10a, 10b, and 10c have emitting surfaces 11a, 11b, and 11c, and the light tunnel 51 has an incident surface 51a. The emitting surfaces 11a, 11b, and 11c of the first through third light source units 10a, 10b, and 10c and the incident surface 51a of the light tunnel 51 may have similar shapes, for example, rectangular shapes, with the same aspect ratio as an image forming device of an image projection apparatus.

To this end, in the first through third light source units 10a, 10b, and 10c, the LED light sources and the collimating lens elements or parabolic reflectors of the collimator are configured to have rectangular shapes with the same aspect ratio as the light tunnel 51.

The condensing lens system 30 may be configured to reduce cross-sections of light beams emitted from the first through third light source units 10a, 10b, and 10c and to deliver the light beams with reduced cross-sections to the light tunnel 51 and to have a property of a 1:1 conjugate between an object and an image. By using the condensing lens system 30 having the property of a 1:1 conjugate between the object and the image, only magnification of incident light is changed and transmitted, and etendue is conserved. The condensing lens system 30 enables light from an object plane to be formed as a real image on an image.

The 1:1 conjugate property of the object to the image can be achieved by configuring the condensing lens system 30 as a telecentric lens system, for example. Thus, the condensing lens system 30 may be a telecentric lens system. In this case, the condensing lens system 30 may be configured so that both ends of an object side and an image side of the condensing lens system 30 satisfy telecentric conditions.

In addition, the condensing lens system 30 may have a magnification corresponding to the ratio of the size of the emitting surfaces 11a, 11b, and 11c of the first through third light source units 10a, 10b, and 10c, that is, an emitting surface of the collimator, and the size of the incident surface 51a of the light tunnel 51, further preferably, but not necessarily, a magnification equal with the ratio of the size.

In this case, when the emitting surfaces 11a, 11b, and 11c of the first through third light source units 10a, 10b, and 10c are placed on the object plane of the condensing lens system 30 and the incident surface 51a of the light tunnel 51 is placed on the image plane of the condensing lens system 30, light emitted from the first through third light source units 10a, 10b, and 10c can be delivered to the light tunnel 51 with a maximum efficiency, which will be described later. In addition, since the condensing lens system 30 is a telecentric optical system, a loss that may occur when an angle of light incident on the light tunnel 51 is modulated can be minimized.

Since an LED light source is not a point light source but a surface light source, light emitted from the LED light source and collimated by the collimator cannot be completely parallel light. Thus, main rays of light beam emitted from the LED light source and collimated by the collimator are parallel to one another, and light diverging with respect to each of the main rays as a central axis exists.

It is assumed that an area of the emitting surfaces 11a, 11b, and 11c of the first through third light source units 10a, 10b, and 10c is "A", a divergence angle of light emitted from the first through third light source units 10a, 10b, and 10c diverging with respect to main ray is "θA", an area of the incident surface 51a of the light tunnel 51 is "B" and a convergence angle of light entering the light tunnel 51 and converging with respect to main ray is "θB".

When light diverging from the object plane symmetrically with respect to the main ray is transferred as light converging with respect to the main ray on the image plane, etendue is conserved.

When the emitting surfaces 11a, 11b, and 11c of the first through third light source units 10a, 10b, and 10c are placed on the object plane of the condensing lens system 30 and the incident surface 51a of the light tunnel 51 is placed on the image plane of the condensing lens system 30, the area "A" times the square of sine value of the divergence angle "θA", i.e., "sin²θA" may be equal with the area "B" times the square of sine value of the convergence angle "θB", i.e., "sin²θB", that is, "Asin²θA" may be equal with "Bsin²θB", according to conservation of etendue. Since the area "B" of the incident surface 51a of the light tunnel 51 is smaller than the area "A" of the emitting surfaces 11a, 11b, and 11c of the first through third light source units 10a, 10b, and 10c, the convergence angle "θB" of converging light with respect to main ray on the incident surface 51a of the light tunnel 51 is larger than the divergence angle "θA" of diverging light with respect to main ray on the emitting surfaces 11a, 11b, and 11c of the first through third light source units 10a, 10b, and 10c.

The telecentric lens system is a lens system by which light having parallel main rays at an object plane can be transferred onto an image plane while maintaining the parallel of the main rays, as can be understood from the optical path shown in FIG. 3.

Since the condensing lens system 30 is configured to allow property of the 1:1 conjugate ratio between the object plane and the image plane and is a telecentric lens system, only the size of beam of light emitted from the first through third light source units 10a, 10b, and 10c and having approximately parallel main rays is reduced by the condensing lens system 30 and incident on the light tunnel 51 while maintaining the parallel of the main rays.

Thus, only the cross-section of light emitted from the first through third light source units 10a, 10b, and 10c is reduced and incident on the light tunnel 51 and the main rays of light are kept parallel so that light emitted from the first through third light source units 10a, 10b, and 10c can be transmitted to the light tunnel 51 with a maximum efficiency. In addition, according to etendue conservation, the convergence angle "θB" of converging light with respect to main rays on the incident surface 51a of the light tunnel 51 is larger than the divergence angle "θA" of diverging light with respect to main ray on the emitting surfaces 11a, 11b, and 11c of the first through third light source units 10a, 10b, and 10c. However, since the main rays of light are kept parallel, a loss that may occur when the angle of light incident on the light tunnel 51 is modulated can be minimized compared to the case where the main rays of light are incident in a nonparallel state.

When the light incident on the light tunnel 51 is condensed light, the main rays of light are not parallel and light converging with respect to main ray of light as a central axis exists. Thus, since more light that does not satisfy total internal reflection (TIR) conditions in the light tunnel 51 exists in this case than in the case where the main rays of light are parallel, light transmission loss is larger than in the case where the main rays of incident light are parallel.

FIGS. 2 and 3 show an example in which the condensing lens system 30 includes four lenses. The number and design specifications of the lenses can be changed as long as the 1:1 conjugate property is maintained. Additionally, the condensing lens system 30 can be changed as long as the telecentric lens system condition is satisfied.

In the illumination unit according to an exemplary embodiment of the present invention, beams of light emitted from the first through third light source units 10a, 10b, and 10c in which the main rays are parallel are maintained in a parallel state and the beams are only reduced in the size and then transferred onto the optical integrator 50, for example, the light tunnel 51, so that an optical transmission efficiency is high and the area of the emitting surfaces 11a, 11b, and 11c of the first through third light source units 10a, 10b, and 10c can be larger than the area of the incident surface of the optical integrator 50, that is, the incident surface 51a of the light tunnel 51. Thus, the number of LED light sources arranged in the first through third light source units 10a, 10b, and 10c is not limited.

Thus, in the illumination unit according to an exemplary embodiment of the invention, a system with high optical efficiency can be configured and the number of arrays of the LED light sources can be optimized and designed so that a sufficient amount of light can be obtained when designing the system and a bright screen can be implemented. In addition, in the illumination unit according to an exemplary embodiment of the present invention, since the size of light beam is reduced by the condensing lens system 30 and mixed by the optical integrator 50 so that uniform illumination light can be obtained.

Various exemplary embodiments of an image projection apparatus having the illumination unit according to the present invention will now be described.

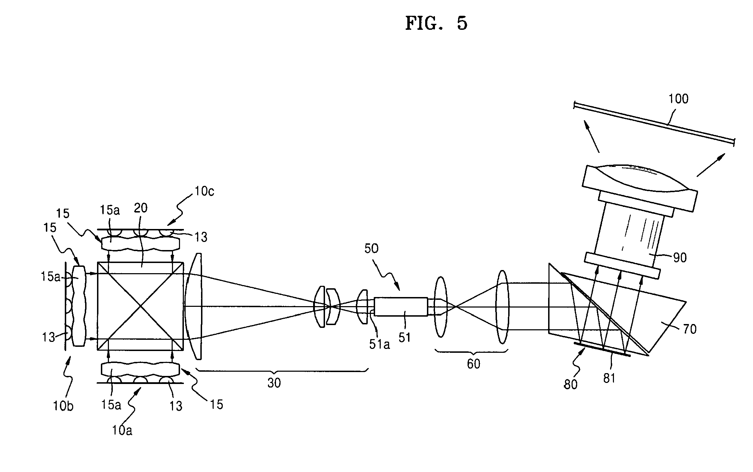

FIG. 5 is a schematic view of an optical configuration of an exemplary embodiment of an image projection apparatus using an illumination unit according to the present invention. Referring to FIG. 5, the image projection apparatus includes the illumination unit, an image forming device 80 that forms an image corresponding to an image signal input using light incident from the illumination unit, and a projection lens unit 90 that enlarges and projects the image formed by the image forming device 80 onto a screen 100.

In the present exemplary embodiment, each of the first through third light source units 10a, 10b, and 10c of the illumination unit includes a plurality of LED light sources 13 arranged in a two-dimensional array and a collimator 15 that collimates light emitted from the LED light sources 13. The collimator 15 is formed in a lens array manner.

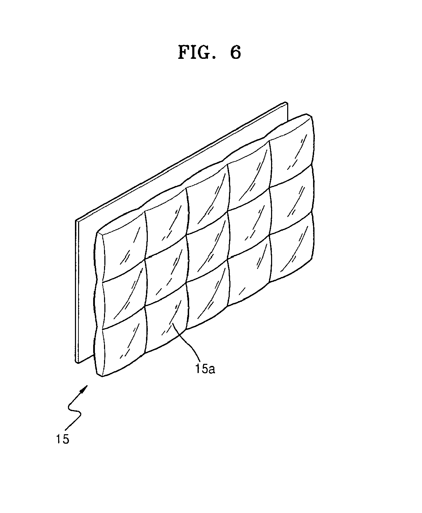

FIG. 6 is a schematic perspective view of the lens array type collimator 15. Referring to FIG. 6, the lens array type collimator 15 includes a plurality of collimating lens elements 15a arranged in a two-dimensional array corresponding to an arrangement of the LED light sources 13. The collimating lens elements 15a of the collimator 15 respectively correspond to the LED light sources 13.

The collimator 15 may have a single lens plate structure in which the collimating lens elements 15a arranged in the two-dimensional array are formed, as shown in FIG. 6.

As described above, the LED light sources 13 are arranged to form a two-dimensional array and the collimating lens elements 15a of the collimator can be arranged in a two-dimensional array to correspond to the arrangement of the LED light sources 13.

The LED light sources 13 are placed at the respective focal points of the corresponding collimating lens elements 15a.

As described above, the first through third light source units 10a, 10b, and 10c have emitting surfaces, and the optical integrator 50, for example, the light tunnel 51, has the incident surface 51a. The emitting surfaces of the first through third light source units 10a, 10b, and 10c and the incident surface 51a of the light tunnel 51 may be formed with similar shapes, for example, in rectangular shapes with the same aspect ratio as the image forming device 80.

In this case, in the first through third light source units 10a, 10b, and 10c, the LED light source units 13 and the collimating lens elements 15a of the collimator 15 are arranged in rectangular shapes with the same aspect ratio as the incident surface 51a of the light tunnel 51.

Here, the remaining configuration of the illumination unit is as described with reference to FIGS. 2 through 4 with like reference numerals in the drawings denoting elements and a description thereof will not be repeated.

Approximately parallel light emitted from the first through third light source units 10a, 10b, and 10c and having parallel main rays is integrated by the color synthesis prism 20 into a single optical path and incident on the condensing lens system 30. Only the cross-sectional area of beam of the approximately parallel light is reduced by the condensing lens system 30 while the parallel state of the main rays is maintained when the beam is incident on the light tunnel 51. White light having a uniform brightness distribution is emitted from the light tunnel 51 and the uniform light is radiated onto the image forming device 80.

In the present exemplary embodiment, the image forming device 80 is a reflection type image forming device that controls the incident uniform light in units of pixels to form an image.

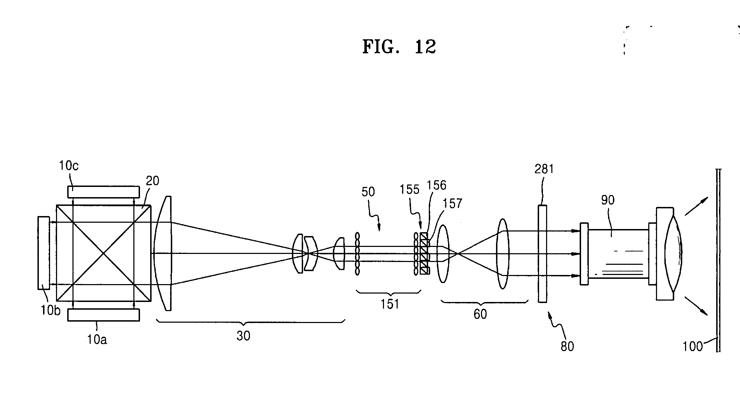

The reflection type image forming device 80 may be a reflection type LCD device (181 of FIG. 11) or a device panel in which micromirrors are formed in an array, such as a digital light processing (DLP) panel 81 (also referred to as a digital micromirror device (DMD)). Alternatively, the image forming device 80 may be a transmission type LCD device (281 of FIG. 12).

FIG. 5 shows an example in which the DLP panel 81 is used as the image forming device 80. The DLP panel 81 includes a two-dimensional array of micromirrors that are independently driven. The DLP panel 81 changes an angle of reflected light for each pixel according to an input image signal to form an image.

When the reflection type image forming device is used as the image forming device 80, the image projection apparatus may further include an optical path changer between the light tunnel 51 and the image forming device 80. The optical path changer changes a path of incident light to direct light incident from the light tunnel 51 to the image forming device 80, and light representing image information reflected from the image forming device 80 travels toward the projection lens unit 90. When the DLP panel 81 is used as the reflection type image forming device 80, a total internal reflection (TIR) prism 70 can be used as an optical path changer, as shown in FIG. 5.

A relay lens system 60 that enlarges or reduces a cross-section of light emitted from the optical integrator 50 according to an effective area of the image forming device 80 may be further disposed along the optical path between the optical integrator 50 and the optical path changer, for example, between the light tunnel 51 and the TIR prism 70,

In the image projection apparatus according to an exemplary embodiment of the present invention, light including image information formed by the image forming device 80 is transmitted through the TIR prism 70 to the projection lens unit 90, and the projection lens unit 90 enlarges and projects the image formed by the image forming device 80 onto the screen 100.

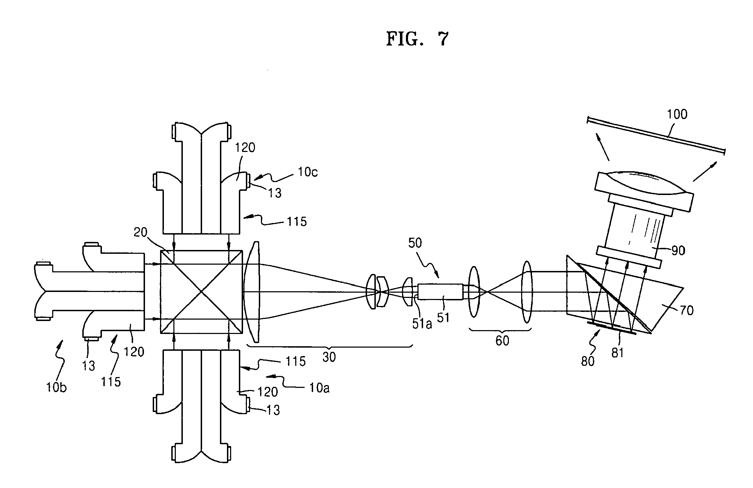

FIG. 7 is a schematic view of an optical configuration of another exemplary embodiment of an image projection apparatus having an illumination unit according to the present invention. The image projection apparatuses of FIG. 7 and FIG. 5 are identical except that, in FIG. 7, the first through third light source units 10a, 10b, and 10c include the LED light sources 13 and collimators 115 comprising the arrangement of parabolic reflectors 120 that constitute an optical module with each of the LED light sources 13. Here, like reference numerals in FIGS. 5 and 7 denote like elements substantially having the same or similar functions.

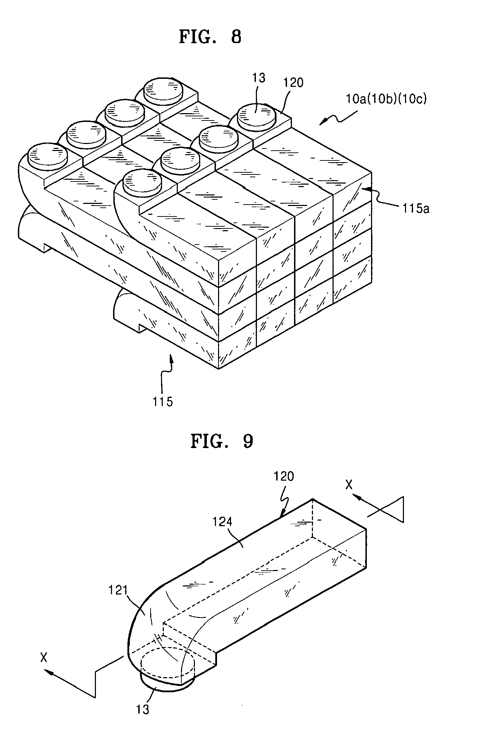

FIG. 8 is a schematic perspective view of the first through third light source units 10a, 10b, and 10c of FIG. 7. As shown in FIG. 8, each of the first through third light source units 10a, 10b, and 10c include the LED light sources 13 and the collimator 115 comprising the arrangement of the parabolic reflectors 120 that constitute an optical module with each of the LED light sources 13. The collimator 115 has a structure in which the parabolic reflectors 120 respectively correspond to the LED light sources 13.

As such, each of the first through third light source units 10a, 10b, and 10c has a shape in which a plurality of LED optical modules including the LED light source 13 and the parabolic reflector 120 are arranged in a two-dimensional array. Here, since the LED light sources 13 produces less light than a metal halide lamp or a very high pressure lamp, the LED light sources 13 may be used in an array.

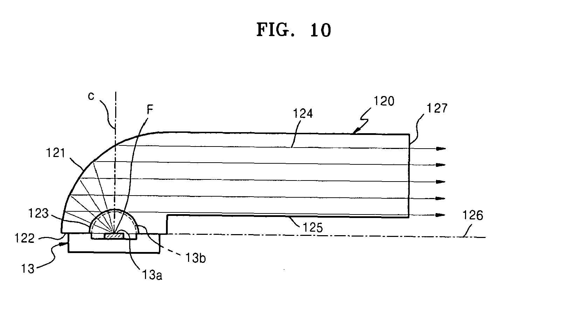

FIG. 9 is a perspective view of one extracted LED optical module of FIG. 8, and FIG. 10 is a cross-sectional view taken along line X-X of FIG. 9.

Referring to FIGS. 8 through 10, each of the LED optical modules includes the LED light source 13 and the parabolic reflector 120 that collimate light emitted from the LED light source 13.

The parabolic reflector 120 includes a parabolic reflecting surface 121, an incident surface 122, and an optical guide portion 124. The light incident on the parabolic reflector 120 through the incident surface 122 is reflected from the parabolic reflecting surface 121 and travels toward the optical guide portion 124.

The incident surface 122 may include a main axis 126 of the parabolic reflecting surface 121, or may be parallel to a plane including the main axis 126, or inclined at a predetermined angle with respect to the plane including the main axis 126. A spherical concave portion 123 is formed in the center portion of the incident surface 122 in size which an LED chip 13a of the LED light source 13 can be inserted inside the spherical concave portion 123. The optical guide portion 124 has a rectangular cross-section.

The parabolic reflector 120 may be configured so that the LED light source 13 is coupled to be protruded below the optical guide portion 124. To this end, a surface 125 of the optical guide portion 124 parallel to the incident surface 122 is stepped in an upward direction with respect to the incident surface 122, thereby reducing the cross-section of the optical guide portion 124.

By the aforementioned formation of the parabolic reflector 120, the probability that light reflected from the parabolic reflecting surface 121 passes through a dome of the LED light source 13 once again is reduced so that a large amount of light can pass through the optical guide portion 124.

When a portion of light radiated by the LED light source 13 is reflected from the parabolic reflecting surface 121 and then travels toward the concave portion 123, the amount of light can be reduced by being reflected from the concave portion 123 or transmitted through the concave portion 123, due to a difference in the refractive indices of the inside material of the parabolic reflector 120 and surrounding medium of the parabolic reflector 120. In this case, the light intensity distribution on the emitting surface 127 of the optical guide portion 124 may indicate to be slightly leaned in the upper direction of the center of the emitting surface 127. However, when the surface 125 parallel to the incident surface 122 of the optical guide portion 124 is stepped in the upper direction of the incident surface 122 as shown in FIG. 9, more light can pass through the optical guide portion 124 and the intensity distribution of light in the emitting surface 127 can be concentrated in the center of the emitting surface 127.

To this end, the step size between the incident surface 122 and the surface 125 of the optical guide portion 124 may be properly adjusted to produce a uniform distribution of light at the emitting surface 127 of the parabolic reflectors 120, in consideration of the shape and size of the concave portion 123.

The parabolic reflecting surface 121 does not mean only a strict parabolic surface with a conic coefficient (K = -1). The parabolic reflecting surface 121 used in the parabolic reflector 120 means an aspheric surface with "K" ranging from -0.4 to -2.5, preferably but not necessarily, -0.7 to -1.6. "K" of the parabolic reflecting surface 121 may be properly selected to collimate light radiated from the LED light source 13 at a radiation angle at which the light can be effectively illuminated on an object to be illuminated. The parabolic reflecting surface 121 with a conic coefficient (K = -1) is described as an example.

The LED light sources 13 includes an LED chip 13a that emits light. Although not shown, the LED light source 13 includes a heat dissipating body for dissipating heat generated in the LED chip 13a and an electrode applying a current to the LED chip 13a.

The LED light source 13 may further include a dome lens (or cap) 13b. The LED light source 13 is placed at the focus "F" of the parabolic reflecting surface 121. Specifically, the LED light source 13 is installed so that the LED chip 13a is placed at the focus "F" of the parabolic reflecting surface 121. The concave portion 123 provides a space in which the LED chip 13a of the LED light source 13 is placed near the focus "F" of the parabolic reflecting surface 121. The concave portion 123 may be formed such that the center coinciding with the focus of the parabolic reflecting surface 121 corresponds to a shape of the dome lens (or cap) 13b of the LED light source 13.

As described above, since the LED chip 13a is not a point light source but a surface light source, not all light generating points are exactly placed at the focus "F" of the parabolic reflecting surface 121. Thus, light emitted from the LED chip 13a and reflected from the parabolic reflecting surface 121 is not complete parallel light, and light diverging with respect to parallel main rays of light may exist.

The LED light source 13 may be disposed so that its optical axis "c" is almost perpendicular to the main axis 126 of the parabolic reflecting surface 121. However, the present invention is not limited to this.

Light radiated from the LED chip 13a enters the parabolic reflector 120 through the concave portion 123. Light is reflected from the parabolic reflecting surface 121 and collimated to form light that is almost parallel to the main axis 126. The light propagates into the optical guide portion 124 and is emitted through the emitting surface 127. The two-dimensional array of the emitting surface 127 is an emitting surface 115a of the collimator 115.

In the LED light source 13, the LED chip 13a may be exposed without a dome lens (or cap) 13b. In this case, a shock-absorbing material may be filled in the concave portion 123.

When the LED chip 13a is exposed without the dome lens (or cap) 13b, air is interposed between the parabolic reflector 120 and the LED chip 13a. When light radiated from the LED chip 13a is incident on the parabolic reflector 120, the light is refracted at a boundary surface of the concave portion 123 due to a difference in the refractive indices of air and the optical guide portion 124 of the parabolic reflector 120. Then, since the area where the light is radiated from the LED chip 13a is not entirely at the focus "F" of the parabolic reflecting surface 121, collimating efficiency is lowered. The shock-absorbing material is used to compensate for the difference in refractive indices of the parabolic reflector 120 and the external medium such as air. The refractive index of the shock-absorbing material may be between the refractive index of the parabolic reflector 120 and the refractive index of air. Even when the LED light source 13 has the dome lens (or cap) 13b, the shock-absorbing material can be filled in the concave portion 123. The refractive index of the shock-absorbing material may be between the refractive index of the dome lens (or cap) 13b and the refractive index of the parabolic reflectors 120.

FIG. 11 is a schematic view of an optical configuration of another exemplary embodiment of an image projection apparatus having an illumination unit according to the present invention. Here, like reference numerals in the embodiments denote like elements, and a description thereof will not be repeated.

Referring to FIG. 11, the image projection apparatus includes a reflection type LCD device 181 as the image forming device 80. In this case, the image projection apparatus may include a pair of fly-eye lenses 151 having a plurality of lens cell arrays having a convex lens or a cylindrical lens shape as the optical integrator 50. Alternatively, instead of the fly-eye lens 151, a light tunnel (51 of FIG. 4) may be used as the optical integrator 50.

In the image projection apparatus, the first through third light source units 10a, 10b, and 10c may include arrayed LED light sources and a collimator formed in a lens array manner, as illustrated in FIG. 5, or arrayed LED light sources and a collimator formed in a parabolic reflector manner, as illustrated in FIG. 7.

An incident surface of the fly-eye lenses 151 may be placed on an image plane of the condensing lens system 30 of the illumination unit.

The reflection type LCD device 181 reflects incident uniform illumination light in units of pixel to form an image. The reflection type LCD device 181 changes the polarization of the incident light in units of pixels according to an image signal to selectively turn on or off the reflected light, thereby forming an image.

When the reflection type LCD device 181 is used as the image forming device 80, the image projection apparatus may include a polarization beam splitter 170 which is an optical path changer for changing the path of the incident light. The polarization beam splitter 170 changes the path of the incident light so that light of one polarization incident from the illumination unit is directed to the reflection type LCD device 181 and light of a different polarization reflected from the reflection type LCD device 181 is directed to the projection lens unit 90.

To improve optical efficiency, the image projection apparatus may further include a polarization converter 155 that turns light radiated from the illumination unit into a single polarized light and transmits the light to the polarization beam splitter 170, the polarization converter 155 is disposed along an optical path between the fly-eye lenses 151 and the polarization beam splitter 170. The polarization converter 155 separates light using a plurality of small-sized polarization beam splitters 156 according to polarization and includes a half wavelength plate 157 only along a path of light with predetermined polarization so that most of the nonpolarized light incident onto the polarization converter 155 changes to be specific polarized light. The polarization converter 155 is well-known in the art.

FIG. 12 is a schematic diagram of an optical configuration of another exemplary embodiment of an image projection apparatus having an illumination unit according to the present invention. The image projection apparatuses of FIGS. 11 and 12 are identical except that the image projection apparatus of FIG. 12 includes a transmission type LCD device 281 as the image forming device 80. When the transmission type LCD device 281 is used as the image forming device 80, a polarization beam splitter (170 of FIG. 11) that serves as an optical path changer is not needed.

The transmission type LCD device 281 changes the polarization of uniform light incident in units of pixel according to an image signal to selectively transmit the light, thereby forming an image.

In the image projection apparatus of the present exemplary embodiment, the first through third light source units 10a, 10b, and 10c may include arrayed LED light sources and a collimator disposed in a lens array manner, as illustrated in FIG. 5 or arrayed LED light sources and a collimator including a parabolic reflector, as illustrated in FIG. 7.

As described above, the illumination unit according to the exemplary embodiments of the present invention is applicable to various image projection apparatuses.

In the illumination unit and the image projection apparatus having the same according to the exemplary embodiments of the present invention, LED light sources are used as small-sized light sources. However, the present invention is not limited to this and different types of small-sized light sources, for example, an organic electroluminescence device (EL) or a field emission device (FED), may be used.

As described above, according to the exemplary embodiments of the present invention, the number of small-sized light sources arranged in an array is not limited so that a sufficient number of small-sized light sources can be arrayed, and only the cross-section of beam of light in which main rays of light emitted from the light source units is parallel to one another are reduced using the condensing lens system while the parallel state of the main rays of light is kept, such that the light can be transmitted to the optical integrator.

Accordingly, a system with a high optical efficiency can be configured, and the number of arrays of LED light sources is optimized so as to obtain a sufficient amount of light when designing the system so that a brightest screen can be implemented. In addition, light beams with cross-sections reduced by the condensing lens system are mixed by the optical integrator so that uniform light can be obtained.

While the present invention has been particularly shown and described with reference to exemplary embodiments thereof, it will be understood by those of ordinary skill in the art that various changes in form and details may be made therein without departing from the spirit and scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An illumination unit comprising:
at least one light source unit (10a, 10b, 10c) which radiates a collimated light beam;
an optical integrator (50) which converts the collimated light beam from the at least one light source unit into a uniform light beam; and
a condensing lens system (30) that is disposed between the at least one light source unit (10a, 10b, 10c) and the optical integrator (50), wherein the condensing lens system (30) reduces a cross-section of the collimated light beam from the at least one light source unit and then guides the collimated light beam with the reduced cross-section to the optical integrator (50) and has a 1:1 conjugate property between an object and an image of the object.

2. The illumination unit of claim 1, wherein the uniform light beam has uniform brightness distribution.

3. The illumination unit of claim 1 or 2, wherein the condensing lens system comprises a telecentric lens system.

4. The illumination unit of any preceding claim, wherein the at least one light source unit has an emitting surface (11a, 11b, 11c), the optical integrator has an incident surface (51a), the emitting surface (11a, 11b, 11c) of the at least one light source unit and the incident surface (51a) of the optical integrator have a similar shape, and the condensing lens system (30) has a magnification according to a ratio of a size of the emitting surface of the at least one light source unit and a size of the incident surface (51a) of the optical integrator.

5. The illumination unit of claim 4, wherein the emitting surface (11a, 11b, 11c) of the at least one light source unit is placed on an object plane of the condensing lens system, and the incident surface (51a) of the optical integrator is placed on an image plane of the condensing lens system.

6. The illumination unit of any preceding claim, wherein the at least one light source unit has an emitting surface (11a, 11b, 11c), the optical integrator has an incident surface (51a), the emitting surface of the at least one light source unit and the incident surface of the optical integrator have a similar shape, and the condensing lens system (30) has a magnification according to a ratio of a size of the emitting surface of the at least one light source unit and a size of the incident surface of the optical integrator.

7. The illumination unit of claim 6, wherein the magnification of the condensing lens system is the same as the ratio of the size of the emitting surface (11a, 11b, 11c) of the at least one light source unit and the size of the incident surface (51a) of the optical integrator.

8. The illumination unit of claim 6, wherein the emitting surface (11a) of the at least one light source unit is placed on an object plane of the condensing lens system, and the incident surface of the optical integrator (51a) is placed on an image plane of the condensing lens system.

9. The illumination unit of any preceding claim, wherein the optical integrator comprises at least one light tunnel (51) having a rectangular parallelepiped shape or at least one fly-eye lens (151).

10. The illumination unit of any preceding claim, wherein the at least one light source unit has an emitting surface (11a, 11b, 11c), the optical integrator has an incident surface (51a), and the emitting surface of the at least one light source unit and the incident surface of the optical integrator have a similar shape with a same aspect ratio.

11. The illumination unit of any preceding claim, wherein, when the at least one light source unit comprises a plurality of light source units (10a, 10b, 10c) radiating different colored light, the illumination unit further comprises a color synthesis prism (20) disposed between the plurality of light source units and the condensing lens system (30), wherein the color synthesis prism synthesizes the different colored light such that the different colored light travels along a same optical path.

12. The illumination unit of claim 11, wherein at least one of the plurality of light source units comprises:
a plurality of LED light sources (13) arranged in a two-dimensional array; and
a collimator (15) which collimates light emitted from the plurality of LED light sources (13).

13. The illumination unit of claim 12, wherein the collimator (15) comprises a plurality of parabolic reflectors (15a) arranged in an array, respectively constituting optical modules with the plurality of LED light sources (13).

14. The illumination unit of claim 12, wherein the collimator (15) is formed in a lens array corresponding to the arrangement of the plurality of light source units.

15. An image projection apparatus comprising:
an illumination unit (10a, 10b, 10c);
an image forming device (80) which forms an image corresponding to an image signal input using a uniform light beam incident from the illumination unit; and
a projection lens unit (90) which enlarges and projects the image formed by the image forming device onto a screen (100),
wherein the illumination unit comprises:
at least one light source unit (10a, 10b,10c) which radiates a collimated light beam;
an optical integrator (50) which converts the collimated light beam from the at least one light source unit into the uniform light beam; and
a condensing lens system (30) that is disposed between the at least one light source unit and the optical integrator, wherein the condensing lens system reduces a cross-section of the collimated light beam emitted from the at least one light source unit and then guides the collimated light beam with the reduced cross-section to the optical integrator and has a 1:1 conjugate property between the image of an object and the object.

16. The image projection apparatus of claim 15, wherein the uniform light beam has uniform brightness distribution.

17. The image projection apparatus of claim 15 or 16, wherein the condensing lens system (30) comprises a telecentric lens system.

18. The image projection apparatus of claim 17, wherein the at least one light source unit has an emitting surface (11a, 11b, 11c), the optical integrator has an incident surface (51a), and the emitting surface of the at least one light source unit and the incident surface of the optical integrator have a similar shape, and the condensing lens system (30) has a magnification according to a ratio of a size of the emitting surface of the at least one light source unit and a size of the incident surface of the optical integrator.

19. The image projection apparatus of claim 18, wherein the emitting surface (11a, 11b, 11c) of the at least one light source unit is placed on an object plane of the condensing lens system, and the incident surface (51a) of the optical integrator is placed on an image plane of the condensing lens system.

20. The image projection apparatus of any of claims 15 to 19, wherein the at least one light source unit has an emitting surface (11a, 11b, 11c), the optical integrator has an incident surface (51a), the emitting surface of the at least one light source unit and the incident surface of the optical integrator have a similar shape, and the condensing lens system has a magnification according to a ratio of the size of the emitting surface of the at least one light source unit and the size of the incident surface of the optical integrator.

21. The image projection apparatus of claim 20, wherein the magnification of the condensing lens system is the same as the ratio of the size of the emitting surface of the at least one light source unit and the size of the incident surface of the optical integrator.

22. The image projection apparatus of claim 20, wherein the emitting surface (11a, 11b, 11c) of the at least one light source unit is placed on an object plane of the condensing lens system (30), and the incident surface of the optical integrator is placed on an image plane of the condensing lens system.

23. The image projection apparatus of any of claims 15 to 22, wherein the optical integrator comprises at least one light tunnel (51) having a rectangular parallelepiped shape or at least one fly-eye lens (151).

24. The image projection apparatus of any of claims 15 to 23, wherein the at least one light source unit has an emitting surface (11a, 11b, 11c), the optical integrator has an incident surface (51a), and the emitting surface of the at least one light source unit and the incident surface of the optical integrator have a similar shape with the same aspect ratio as the image forming device.

25. The image projection apparatus of any of claims 15 to 24, wherein, when the image forming device comprises a reflection type image forming device (181) selectively reflecting the uniform light beam from the illumination unit to form an image, the image projection apparatus further comprises an optical path changer (170) disposed between the illumination unit and the image forming device, wherein the optical path changer changes a path of the uniform light beam incident from the illumination unit and directs light reflected by the image forming device toward the screen (100).

26. The image projection apparatus of claim 25, wherein the reflection type image forming device comprises a plurality of micromirrors arranged in an array.

27. The image projection apparatus of claim 25, wherein the reflection type image forming device comprises a reflection type liquid crystal display (LCD) device (181), and the optical path changer transmits or reflects the uniform light beam according to polarization of the uniform light beam.

28. The image projection apparatus of claim 15, wherein the image forming device comprises a transmission type LCD device (281).

29. The image projection apparatus of any of claims 15 to 28, wherein, when the at least one light source unit comprises a plurality of light source units radiating different colored light, the image projection apparatus further comprises a color synthesis prism (20) disposed between the plurality of light source units and the condensing lens system (30), wherein the color synthesis prism synthesizes the different colored light such that the different colored light travels along a same optical path.

30. The image projection apparatus of any of claims 15 to 29, wherein at least one of the plurality of light source units comprises:
a plurality of LED light sources (13) arranged in a two-dimensional array; and
a collimator (15) which collimates light emitted from the plurality of LED light sources.

31. The image projection apparatus of claim 30, wherein the collimator (15) comprises a plurality of parabolic reflectors (15a) arranged in an array, respectively constituting optical modules with the plurality of LED light sources.

32. The image projection apparatus of claim 30, wherein the collimator is formed in a lens array corresponding to the arrangement of the plurality of light source units.

33. A light illumination method comprising:
(a) radiating a collimated light beam;
(b) condensing (30) the collimated light beam by reducing a cross-section of the collimated light beam and guiding the collimated light beam with the reduced cross-section while a 1:1 conjugate property between an object and an image of the object is maintained; and
(c) converting the guided collimated light beam into a uniform light beam.

34. The method of claim 33:
wherein operation (a) is performed using at least one light source unit which has an emitting surface (11a, 11b, 11c), and operation (c) is performed using an optical integrator (50) which has an incident surface (51a); and
wherein the reducing of the cross-section of the collimated light beam in operation (b) is performed using a condensing lens system (30) with a magnification according to a ratio of a size of the emitting surface of the at least one light source unit and a size of the incident surface of the optical integrator.

35. The method of claim 34, wherein the magnification of the condensing lens system is the same as the ratio of the size of the emitting surface (11a, 11b, 11c) of the at least one light source unit and the size of the incident surface (51a) of the optical integrator.

36. The method of any of claims 33 to 35, wherein operation (c) comprises integrating the guided collimated light beam using at least one light tunnel (51) having a rectangular parallelepiped shape or at least one fly-eye lens (151).

37. The method of any of claims 33 to 36:
wherein operation (a) is performed using at least one light source unit which has an emitting surface (11a, 11b, 11c), and operation (c) is performed using an optical integrator (50) which has an incident surface (51a); and
wherein the emitting surface of the at least one light source unit and the incident surface of the optical integrator have a similar shape with a same aspect ratio.

38. An image projection method using the light illumination method according to any of claims 33 to 37, the method comprising:
(d) forming an image corresponding to an image signal input using the uniform light beam; and
(e) enlarging and projecting (90) the image formed in operation (d) onto a screen (100).

39. The method of claim 38,
wherein operation (a) is performed using at least one light source unit which has an emitting surface (11a, 11b, 11c), and operation (c) is performed using an optical integrator (50) which has an incident surface (51a); and
wherein the reducing of the cross-section of the collimated light beam in operation (b) is performed using a condensing lens system (30) with a magnification according to a ratio of a size of the emitting surface of the at least one light source unit and a size of the incident surface of the optical integrator.

40. The method of claim 39, wherein the magnification of the condensing lens system is the same as the ratio of the size of the emitting surface (11a, 11b, 11c) of the at least one light source unit and the size of the incident surface (51a) of the optical integrator (50).

41. The method of any of claims 38 to 40, wherein operation (c) comprises integrating (50) the guided collimated light beam using at least one light tunnel (51) having a rectangular parallelepiped shape or at least one fly-eye lens (151).

42. The method of any of claims 38 to 41:
wherein operation (a) is performed using at least one light source unit which has an emitting surface (11a), operation (c) is performed using an optical integrator (50) which has an incident surface, and operation (d) is performed using an image forming device (80); and
wherein the emitting surface (11a, 11b, 11c) of the at least one light source unit and the incident surface (51a) of the optical integrator (50) have a similar shape with the same aspect ratio as the image forming device.

43. The method of any of claims 38 to 42, wherein, when operation (d) is performed using a reflection type image forming device (181) selectively reflecting the uniform light beam, operation (d) further comprises changing (170) a path of the uniform light beam and reflecting light representing information of the image.

44. The method of claim 43, wherein the changing (170) of the path of the uniform light beam comprises transmitting or reflecting the uniform light beam according to polarization of the uniform beam light.
